# EUROPÄISCHE PATENTSCHRIFT

(11) **EP 0 638 459 B1**
(45) Veröffentlichungstag und Bekanntmachung des Hinweises auf die Patenterteilung: **17.09.1997**
(21) Anmeldenummer: 93118906.2
(22) Anmeldetag: 24.11.1993
(51) Int. Cl.: B60N 2/46

(54) **Armstütze für Kraftfahrzeuge**
Armrest for automotive vehicles
Accoudoir pour véhicules automobiles

(30) Priorität: 24.11.1992 DE 9215936 U
(43) Veröffentlichungstag der Anmeldung: 15.02.1995
(73) Patentinhaber: Seiberlich, Bernd, D-74821 Mosbach (DE)
(72) Erfinder: Seiberlich, Bernd, D-74821 Mosbach (DE)
(74) Vertreter: Clemens, Gerhard, Dr.-Ing.

(56) Entgegenhaltungen:
- EP-A- 0 243 954
- EP-A- 0 376 153
- DE-A- 4 019 883
- DE-U- 8 903 383
- FR-A- 1 202 780
- FR-E- 92 525
- GB-A- 2 189 756
- US-A- 3 103 630

## Beschreibung

Die Erfindung betrifft eine langgestreckte Armstütze, die eine vordere freie Stirnseite besitzt, mit einem inneren Versteifungskörper ausgestattet ist, der sich in Längsrichtung der Armstütze erstreckt, der mit Polstermaterial umkleidet ist und an dessen hinterem Ende die Montagemittel angreifen, wobei ein langgestreckter Aufnahmebehälter für einen zusammengefalteten Taschenschirm mit einem Handgriff vorgesehen ist, der in Längsrichtung der Armstütze im Inneren untergebracht ist, mit dem Polstermaterial umkleidet ist und durch je eine in der vorderen Stirnseite vorgesehene Öffnung für den Taschenschirm zugänglich ist.

Die DE-U-89 03 383 beschreibt eine langgestreckte Armstütze für einen Sitz im Innenraum eines Kraftfahrzeuges, die mit ihrer freien Stirnseite in Fahrtrichtung weisend montiert ist, mit einem inneren Versteifungskörper ausgestattet ist, der sich in Längsrichtung erstreckt, der mit Polstermaterial umkleidet ist und an dessen, bezogen auf die Fahrtrichtung, hinterem Ende die Montagemittel angreifen. Diese Armstütze weist einen langgestreckten Aufnahmebehälter für einen bestimmten Gegenstand auf, der in Längsrichtung im Inneren untergebracht ist, mit dem Polstermaterial umkleidet ist und durch eine in der Stirnseite vorgesehene Öffnung zur Aufnahme des Gegenstandes zugänglich ist.

In der GB-A-2 189 756 ist ein rohrartiger Regenschirmhalter für den Innenraum eines Fahrzeuges beschrieben.

Aufgabe der Erfindung ist es, eine Armstütze anzugeben, die eine auch während des Fahrbetriebs zuverlässig arretierbare Lagerung des Taschenschirms in dieser Armstütze gewährleistet und gleichzeitig ein einfaches Entriegeln zur Entnahme des Taschenschirms ermöglicht.

Diese Aufgabe wird dadurch gelöst, daß die Öffnung ein Innengewinde besitzt, in das ein Außengewinde des als Verschluß ausgebildeten Handgriffs des Taschenschirms einschraubbar ist.

Diese Lösung ist mit geringem Aufwand zu verwirklichen und benötigt keinen zusätzlichen Platz im Inneren des Kraftfahrzeuges, weil der an sich sowieso vorhandene Platz im Inneren des Polstermaterials und/oder des Versteifungskörpers ausgenutzt werden kann.

Der Aufnahmebehälter kann neben dem Versteifungskörper, mit dem Versteifungskörper verbunden und durch diesen versteift oder durch den Versteifungskörper gebildet sein.

Die Erfindung wird nun anhand der beigefügten Zeichnung näher erläutert.

In der Zeichnung zeigt:
- Fig. 1: ein Ausführungsbeispiel einer Armführungsstütze im Längsschnitt und
- Fig. 2: die Ansicht gemäß dem Pfeil X aus Figur 1.

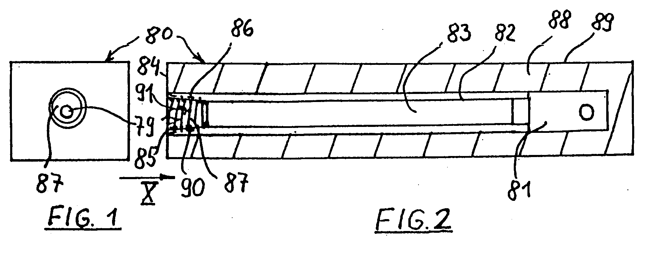

Bei dem Ausführungsbeispiel nach Figur 1 und 2 weist ein langgestreckter, in Längsrichtung im Inneren einer Armstütze 80 angeordneter Versteifungskörper 81 einen langgestreckten Aufnahmekanal 82 für einen Taschenschirm 83 auf. Der Aufnahmekanal 82 weist in der Stirnseite 84 eine Öffnung 85 auf. Die Innenwand des Aufnahmekanals 82 bildet zur Öffnung 85 ein sich konisch erweiterndes Endstück 86. Das Endstück 86 ist mit Innengewinde 90 versehen. In dieses Endstück 86 ist ein entsprechend ausgebildeter, mit Außengewinde 91 versehener Handgriff 87 des eingesteckten Taschenschirms 83 geschraubt. Der Handgriff 87 weist ein von außen zugängliches Fingerloch 79 auf, über das der Taschenschirm bequem herausgedreht und dann herausgezogen werden kann. In eingeschraubtem Zustand wird der Taschenschirm 83 durch Reibungsschluß gehalten. Ein besonderer Verschluß für die Öffnung 85 ist nicht erforderlich, weil der Handgriff 87 diesen Verschluß bildet.

Bei diesem Ausführungsbeispiel ist der Versteifungskörper mit Polstermaterial 88 und einem Überzug 89 umhüllt.

## Patentansprüche

1. Langgestreckte Armstütze (80) für einen Sitz im Inneren eines Kraftfahrzeuges,
- die eine vordere freie Stirnseite (84) besitzt,
- mit einem inneren Versteifungskörper (81) ausgestattet ist, der sich in Längsrichtung der Armstütze (80) erstreckt, der mit Polstermaterial umkleidet ist und an dessen hinterem Ende die Montagemittel angreifen,
- wobei ein langgestreckter Aufnahmebehälter (82) für einen zusammengefalteten Taschenschirm (83) mit einem Handgriff (87) vorgesehen ist, der in Längsrichtung der Armstütze (80) im Inneren untergebracht ist, mit dem Polstermaterial umkleidet ist und durch je eine in der vorderen Stirnseite (84) vorgesehene Öffnung (85) für den Taschenschirm (83) zugänglich ist,
**dadurch gekennzeichnet**, daß
- die Öffnung (85) ein Innengewinde (90) besitzt, in das ein Außengewinde (91) des als Verschluß ausgebildeten Handgriffs (87) des Taschenschirms (83) einschraubbar ist.

2. Armstütze nach Anspruch 1, dadurch gekennzeichnet,
daß der Aufnahmebehälter (82) neben dem Versteifungskörper (81) angeordnet ist.

3. Armstütze nach Anspruch 2, dadurch gekennzeichnet,
daß der Aufnahmebehälter (82) mit dem Versteifungskörper (81) verbunden und durch diesen versteift ist.

4. Armstütze nach Anspruch 1, dadurch gekennzeichnet,
daß der Aufnahmebehälter (82) durch den Versteifungskörper (81) gebildet ist.

5. Armstütze nach einem der vorhergehenden Ansprüche, dadurch gekennzeichnet,
daß für die Öffnung (85) ein Verschluß vorgesehen ist, der in der Stirnseite (84) angeordnet ist und von Hand öffen- und schließbar ist.

## Claims

1. Elongate armrest (80), for a seat in the interior of a motor vehicle,
- which has a front, free end side (84) and
- is equipped with an inner stiffening body (81) which extends in the longitudinal direction of the armrest (80), is encased by padding material and has the installation means acting at its rear end,
- there being provided an elongate receiving container (82) tor a collapsed telescopic umbrella (83) with a handle (87), said receiving container being accommodated in the longitudinal direction of the armrest (80), in the interior thereof, being encased by the padding material and being accessible through in each case one opening (85), provided in the front end side (84), for the telescopic umbrella (83),
characterized in that
- the opening (85) has an internal thread (90) into which it is possible to screw an external thread (91) of the handle (87) of the telescopic umbrella (83), said handle being designed as a closure.

2. Armrest according to Claim 1, characterized in that the receiving container (82) is arranged beside the stiffening body (81).

3. Armrest according to Claim 2, characterized in that the receiving container (82) is connected to the stiffening body (81) and is stiffened by the latter.

4. Armrest according to Claim 1, characterized in that the receiving container (82) is formed by the stiffening body (81).

5. Armrest according to one of the preceding claims, characterized in that there is provided, for the opening (85), a closure which is arranged in the end side (84) and can be opened and closed by hand.

## Revendications

1. Accoudoir allongé (80) pour un siège situé dans l'habitacle d'un véhicule automobile,
- qui comporte une face frontale avant libre (84),
- est muni d'un corps de renforcement interne (81) qui s'étend dans la direction longitudinale de l'accoudoir (80), qui est entouré d'un rembourrage et à l'extrémité arrière duquel sont appliqués les moyens de montage,
- sachant qu'est prévu un réceptacle allongé (82) pour un parapluie pliant plié (83) muni d'un manche (87), qui est logé longitudinalement à l'intérieur de l'accoudoir (80), est entouré par le rembourrage et est accessible par une ouverture (85) prévue dans la face frontale avant (84) pour y ranger le parapluie pliant (83), caractérisé en ce que
- l'ouverture (85) comporte un taraudage (90) dans lequel se visse un filetage (91) du manche (87) du parapluie pliant (83) qui est réalisé en tant que dispositif de fermeture.

2. Accoudoir selon la revendication 1, caractérisé en ce que le réceptacle (82) est placé à côté du corps de renforcement (81).

3. Accoudoir selon la revendication 2, caractérisé en ce que le réceptacle (82) est relié au corps de renforcement (81) et est renforcé par celui-ci.

4. Accoudoir selon la revendication 1, caractérisé en ce que le réceptacle (82) est formé par le corps de renforcement (81).

5. Accoudoir selon l'une des revendications précédentes, caractérisé en ce qu'un dispositif de fermeture est prévu pour l'ouverture (85), qui est logé dans la face frontale (84) et peut être ouvert et fermé manuellement.
